# EUROPEAN PATENT APPLICATION

(11) **EP 1 298 886 A2**
(43) Date of publication of application: **02.04.2003**
(21) Application number: 02256668.1
(22) Date of filing: 25.09.2002
(51) Int. Cl.: H04L 29/06

(54) **Information providing server, information providing system, and control method for terminal apparatus**

(30) Priority: 28.09.2001 JP 2001300588
(71) Applicant: CANON KABUSHIKI KAISHA, Tokyo (JP)
(72) Inventor: Igeta, Satoshi, c/o Canon Kabushiki Kaisha, Tokyo (JP); Watanabe, Satoshi, c/o Canon Kabushiki Kaisha, Tokyo (JP)
(74) Representative: Beresford, Keith Denis Lewis

(57) **Abstract**

An information providing server is disclosed, which can protect information, provides excellent usability for users, and requires only a small processing load for user authentication. According to this invention, a communication device used by a properly authenticated user is caused to store cookie information as authentication information indicating that the user has been properly authenticated. If a direct browse request that directly designates browse information is generated, it is checked whether cookie information corresponding to the user is stored in the user PC which has transmitted this direct browse request. Control information for controlling to present information is transmitted only when the cookie information indicates that user authentication was properly performed in the past.

## Description

### FIELD OF THE INVENTION

The present invention relates to an information providing server which provides a registered user with the information designated by the user, and a control method for the server.

The present invention also relates to a communication terminal which is used when a user uses such an information providing server, and a control method for the terminal.

The present invention further relates to an information providing system having such an information providing server and/or a terminal apparatus.

### BACKGROUND OF THE INVENTION

Recently, with improvements in communication environments and advances in information communication techniques, service sites for providing information and/or services have been realized by using computer networks, e.g., the Internet.

Such service sites include sites for providing only users who have been registered (registered users) with services regardless of whether the users are charged or not.

In a server apparatus which forms a site for providing only registered users with information providing services, two conventional user authentication methods have been known.

One is the method of performing user authentication every time a user designates information to be accessed, thereby checking whether the user is a registered user. In this case, information indicating whether the user is authenticated need not be stored in a client terminal used by the user. However, user authentication must be done every time the user refers to information. In addition, in user authentication, data must be encrypted by using a protocol such as HTTPS (HyperText Transfer Protocol Security). As a consequence, the load on the server apparatus increases.

The other is the method of making a user access a predetermined URL or the like and allowing the user to refer to information only by a predetermined procedure after user authentication. Like the above method, this method has the merit of eliminating the necessity to store, in a client terminal, information indicating whether user authentication has been done. However, authentication information such as a session key is required to allow the user to refer to information. In order to refer to information, therefore, the user must execute a predetermined procedure. That is, the user cannot directly refer to the information by using a URL or the like.

### SUMMARY OF THE INVENTION

The present invention has been made in consideration of such problems in the conventional techniques, and has as a concern to provide an information providing server which can protect information, provides excellent usability for users, and requires only a small processing load for user authentication, and a control method for the server.

It is another concern of the present invention to provide a communication terminal which can communicate with the information providing server according to the present invention, and a control method for the terminal.

It is still another concern to provide an information providing system using the information providing server and/or the communication terminal according to the present invention.

According to an aspect of the present invention, an information providing server which can send response information which corresponds to a request transmitted through a communication terminal connected to the network is characterized by comprising:
authentication means for performing authentication of a user who has transmitted the request by using the communication terminal;
instructing means for, if the authentication is properly performed by said authentication means, instructing the communication terminal to store authentication information indicating that the user who uses the communication terminal is properly authenticated;
creating means for creating the response information by combining a content information specified by the request and control information for controlling the communication terminal to present the user with the content information according to whether the authentication information is stored in the communication terminal or not; and
transmission control means for sending the response information to the communication terminal.

According to another aspect of the present invention, a communication terminal which can use an information providing server which sends response information which corresponds to a request received through the network is characterized by comprising:
authentication information storage means for, if a user who uses the information providing server through the communication terminal is properly authenticated in the information providing server, storing authentication information indicating that the user is properly authenticated; and
control means for controlling to present the user with a content information included in the response information returned in response to the request according to whether the authentication information corresponding to the user is stored or not.

According to a further aspect of the present invention, a control method for an information providing server which can send response information which corresponds to a request transmitted through a communication terminal connected to the network is characterized by comprising:
the authentication step of performing authentication of a user who has transmitted the request by using the communication terminal;
the instructing step of, if the authentication is properly performed in the authentication step, instructing the communication terminal to store authentication information indicating that the user who uses the communication terminal is properly authenticated;
the creating step of creating the response information by combining a content information specified by the request and control information for controlling the communication terminal to present the user with the content information according to whether the authentication information is stored in the communication terminal or not; and
the transmission control step of sending the response information to the communication terminal.

According to a still further aspect of the present invention, a control method for a communication terminal which can use an information providing server which sends response information which corresponds to a request received through the network is characterized by comprising:
the authentication information storage step of, if a user who uses the information providing server through the communication terminal is properly authenticated in the information providing server, storing authentication information indicating that the user is properly authenticated; and
the control step of controlling to present the user with a content information included in the response information returned in response to the request according to whether the authentication information corresponding to the user is stored or not.

In addition, and according to another aspect of the present invention, a computer program for causing a computer apparatus to function as an information providing server which can send response information which corresponds to a request transmitted through a communication terminal connected to the network is characterized by comprising:
authentication means for performing authentication of a user who has transmitted the browse request by using the communication terminal;
instructing means for, if the authentication is properly performed by the authentication means, instructing the communication terminal to store authentication information indicating that the user who uses the communication terminal is properly authenticated;
creating means for creating the response information by combining a content information specified by the request and control information for controlling the communication terminal to present the user with the content information according to whether the authentication information is stored in the communication terminal or not; and
transmission control means for sending the response information to the communication terminal.

A still further aspect of the present invention provides a computer program for causing a computer apparatus to function as a communication terminal which can use an information providing server which send response information which corresponds to a request received through the network, characterized by comprising:
authentication information storage means for, if a user who uses the information providing server through the communication terminal is properly authenticated in the information providing server, storing authentication information indicating that the user is properly authenticated; and
control means for controlling to present the user with a content information included in the response information returned in response to the request according to whether the authentication information corresponding to the user is stored or not.

Another aspect of the present invention provides a computer-readable storage medium characterized by storing the computer program of the present invention.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, server to explain the principles of the invention.
Fig. 1 is a block diagram showing an example of the overall arrangement of a network system using an information providing server according to an embodiment of the present invention;
Fig. 2 is a block diagram showing an example of the arrangement of a computer apparatus which can be used as an information providing server or user PC according to an embodiment of the present invention;
Fig. 3 is a view showing an example of the arrangement of a user information data table managed by the information providing server according to the embodiment of the present invention;
Fig. 4 is a view showing an example of the initial window transmitted from the information providing server according to the embodiment of the present invention;
Fig. 5 is a flow chart for explaining user registration processing in the information providing server according to the embodiment of the present invention;
Fig. 6 is a view showing an example of the user registration window transmitted from the information providing server according to the embodiment of the present invention;
Fig. 7 is a view showing an example of the error window transmitted from the information providing server in the user registration processing in Fig. 5 when data concerning a necessary item is not input;
Fig. 8 is a view showing an example of the error window transmitted from the information providing server in the user registration processing in Fig. 5 when the login name input by the user has already been registered;
Fig. 9 is a view showing an example of the error window transmitted from the information providing server in the user registration processing in Fig. 5 when the user is prompted to input a password again;
Fig. 10 is a view showing an example of the error window transmitted from the information providing server in the user registration processing in Fig. 5 when the re-input password differs from the password that has already been set;
Fig. 11 is a view showing an example of the user registration confirmation window transmitted from the information providing server in the user registration processing in Fig. 5;
Fig. 12 is a view showing an example of the contents of e-mail transmitted when user registration is to be done in the user registration processing in Fig. 5;
Fig. 13 is a view showing an example of the error window transmitted from the information providing server when the user fails to login from the initial window shown in Fig. 4;
Fig. 14 is a view showing an example of the service provision initial window transmitted to a user PC when the user successfully logs in to the information providing server according to the embodiment of the present invention;
Fig. 15 is a flow chart for explaining an outline of information providing service processing for user operation on the service provision initial window shown in Fig. 14;
Fig. 16 is a view showing an example of the information browse window transmitted from the information providing server according to the embodiment to the user who has undergone authentication; and
Fig. 17 is a flow chart for explaining browse permission/inhibition determination processing performed by a user PC according to the embodiment;
Fig. 18 is a view showing an example of the error window presented to a user who cannot browse information in the browse permission/inhibition determination processing in Fig. 17; and
Fig. 19 is a flow chart for explaining access processing in the information providing server according to the embodiment of the present invention.

### DETAILED DESCRIPTION OF THE PREFERRED EMBODIMENT

A preferred embodiment of the present invention will now be described in detail in accordance with the accompanying drawings.

### ■ (Overall Arrangement)

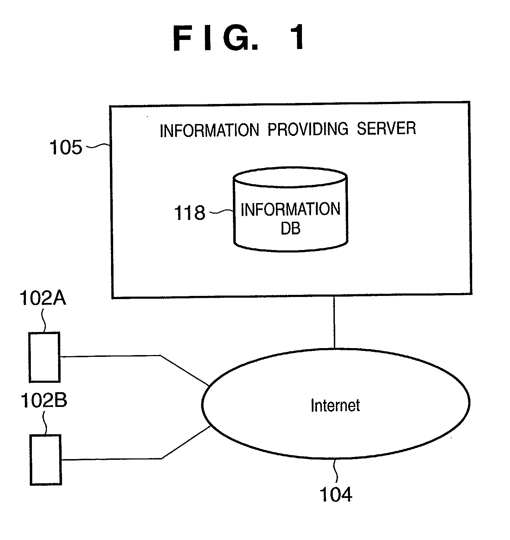

Fig. 1 is a view showing an arrangement of the overall arrangement of an information providing system using an information providing server according to this embodiment.

Referring to Fig. 1, reference numerals 102A and 102B denote computer devices such as personal computers (to be referred to as user PCs hereinafter) used by users of the information providing system in Fig. 1. These user PCs function as communication terminals according to the present invention which can communicate with the information providing server to be described later. A user PC 102 is connected to the Internet 104 as a computer network.

On the user PC 102, a browser accesses a server apparatus (information providing server) 105 which forms an information provision site by using a standard protocol such as HTTP (HyperText Transfer Protocol), loads/analyzes a file created by a description language such as HTML (HyperText Markup Language) or XML (eXtensible Markup Language), and further loads linked multimedia information such as image information and sound information, thereby displaying a Web page. With this operation, the user PC 102 (its user) can receive the service provided by the information providing server 105 through the Internet 104.

The user of the user PC 102 then transmits an information browse request to the information providing server 105 through the browser. The information providing server 105 reads out information from a database 118 in accordance with the browse request and transmits the information to the user PC 102. Pieces of information that can be provided are stored in the database 118 in correspondence with pieces of address information, e.g., URLs, which can be specified from the user PC 102. In the database 118 of the information providing server 105, user attribute information of the registered users of the information providing server 105 and various kinds of information to be provided for the registered users are collectively managed. In this manner, the user of the user PC 102 can browse the designated information through the browser.

### ■ (Arrangements of Information Providing Server 105 and User PC 102)

In this embodiment, the information providing server 105 and user PC 102 can be realized by general-purpose computers such as personal computers which can be connected to a computer network.

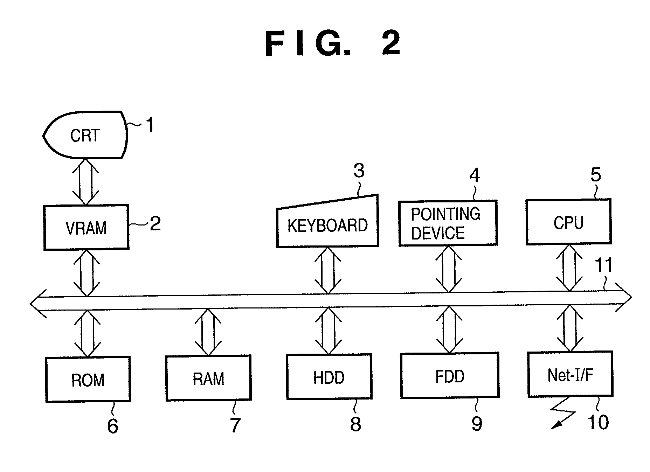

Fig. 2 is a block diagram showing an example of the arrangement of a computer apparatus that can be used as the information providing server 105 or user PC 102 in this embodiment.

Referring to Fig. 2, reference numeral 1 denotes a CRT (Cathode Ray Tube) which displays the data that is being processed by an application program, various message menus, and the like; 2, a video RAM (to be referred to as a VRAM hereinafter) which bitmaps an image to be displayed on the screen of the CRT 1; 3 and 4, a keyboard and a pointing device, respectively, which are used to input characters and the like in predetermined columns on the screen and indicate icons, buttons, and the like on a GUI (Graphic User Interface); and 5, a CPU which performs overall control.

Reference numeral 6 denotes a ROM (Read Only Memory) in which the operation procedures (programs) executed by the CPU 5 are stored. Note that programs associated with the flow charts to be described later, including application programs associated with data processing and error processing programs, are also stored in the ROM 6. Reference numeral 7 denotes a RAM (Random Access Memory) which is used as a work area when the CPU 5 executes the various programs described above and a save area for error processing.

Reference numeral 8 denotes a hard disc drive (to be referred to as an HDD hereinafter); and 9, a floppy disc drive (to be referred to as an FDD hereinafter). These disc drives are used as storage areas for an OS, application programs such as a browser, data, libraries, and the like. In place of the FDD or in addition thereto, an optical (magnetic) disc drive such as a CD-ROM, MO, or DVD, a magnetic tape drive such as a tape streamer or DDS, or the like may be used.

Reference numeral 10 denotes a network interface which is used to connect the apparatus to the network; and 11, an I/O bus (constituted by an address bus, data bus, and control bus) which connects the above units to each other.

Such a general-purpose computer apparatus is connected to the Internet 104 through a necessary network device (not shown) such as a modem or router, another computer apparatus, or the like, as needed.

In the information providing server 105 according to this embodiment, the database 118 shown in Fig. 1 can be realized as a predetermined area in the HDD 8 in Fig. 2 (or an independent HDD). Each process to be described below can be implemented by making the CPU 5 execute a program stored in a predetermined area in the like of the ROM 6 or HDD 8 and control necessary constituent elements.

As examples of services provided by the information providing server 105 realized by the above system, the following services will be mainly described in detail in this embodiment:
(1) user registration: making the user PC 102 perform registration to use the information providing server 105 and issuing a user ID;
(2) user authentication: making the user PC 102 perform user authentication with respect to the information providing server 105;
(3) information provision: providing the information designated using a URL or the like by the user PC 102 of the authenticated user; and
(4) provision of information to third party:
   providing the information designated using a URL or the like by the user PC 102 of the user who is not authenticated.

Each of the above services will be described in detail later. Obviously, the services and functions provided by the information providing server of this embodiment are not limited to those described above.

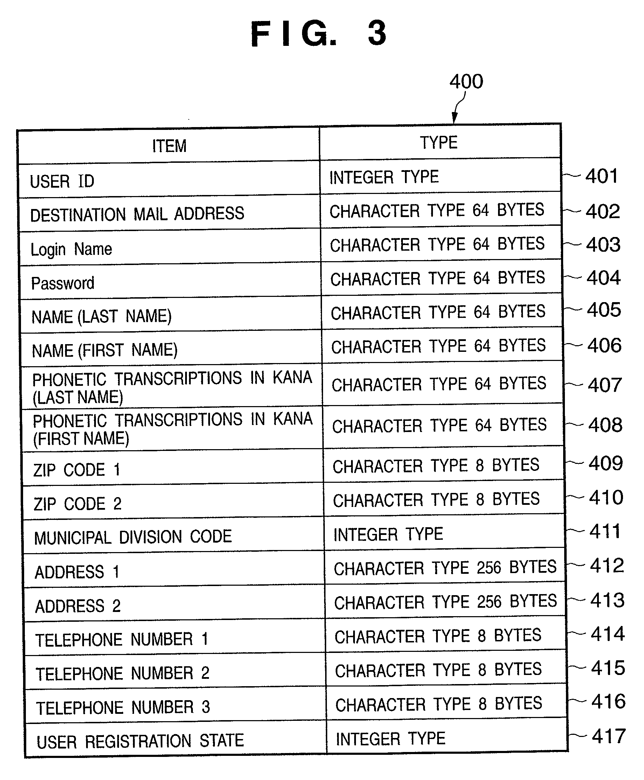

Fig. 3 is a view showing an example of the data table managed by the database 118 of the information providing server 105 according to this embodiment, and more specifically, an example of the data table associated with user information. When the user executes user registration to be described later, one record of a user information data table 400 is created and registered in the database 118 to be managed. For a registered user, a unique user ID 401 is defined, and the user information data table 400 is managed by using this user ID 401 as a key.

The information managed as user information includes a destination mail address 402, login name 403, password 404, name (last name) 405, name (first name) 406, phonetic transcriptions in kana (last name) 407, phonetic transcriptions in kana (first name) 408, zip codes (1, 2) 409 and 410, municipal division code 411, addresses (1, 2) 412 and 413, telephone numbers (1, 2, 3) 414, 415, and 416, and user registration state 417. When the user registration state 417 is 1, it indicates that the user has already been registered and is allowed to use the information providing server. When this information is 0, it indicates that the use of the server is inhibited.

### ■ (Access Processing of Information Providing Server 105)

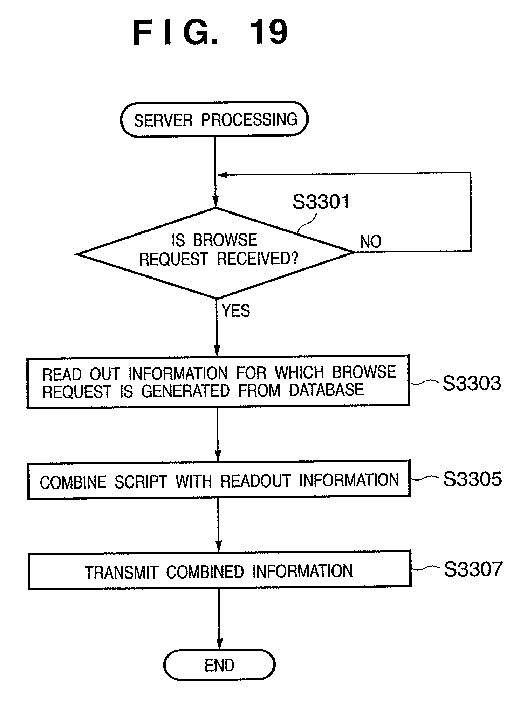

Access processing of the information providing server 105 according to this embodiment will be described next with reference to the flow chart of Fig. 19.

The information providing server 105 is in a standby state to receive a browse request from the user PC 102 serving as a communication terminal according to this embodiment (step S3301).

If it is determined in step S3301 that a browse request has been received, the information providing server 105 reads out the information to be browsed from the database 118 in step S3303. The information providing server 105 then combines the information to be browsed, which is read out in step S3303, with a script to be executed by the user PC 102 which has transmitted the browse request (step s3305). The information and script which have been combined in step S3305 are transmitted to the user PC 102 (step s3307).

As will be described later, the user PC 102 executes this script to perform user authentication with respect to the user who has generated the browse request or determines whether to allow the user to browse or not. That is, the script contains information for controlling the user PC 102 to display an initial window 1900 for user authentication or information for controlling the user PC 102 to display or not to display the information to be browsed.

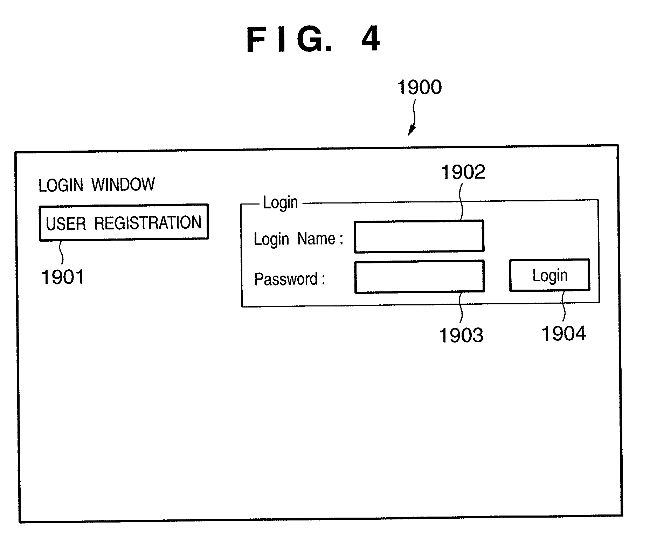

In the initial window 1900 shown in Fig. 4, a user registration button 1901, a login name input area 1902 which is used by the user who has done user registration to use an information provision site, a password input area 1903, and a login button 1904 are arranged.

Processes to be done when the respective buttons in the window shown in Fig. 4 are pressed (clicked with a mouse or the like) will be described below.

### ■ (User Registration Processing)

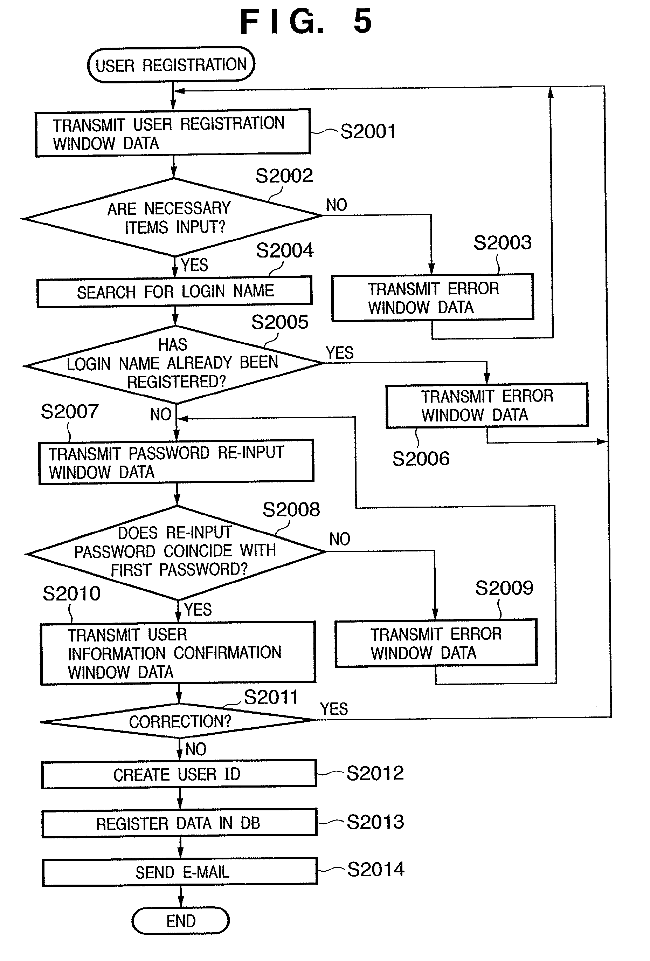

User registration processing will be described first with reference to Figs. 5 to 12.

Fig. 5 is a flow chart showing the processing performed by the information providing server 105 when user registration is done. As described above, the processing shown in Fig. 5 is implemented by causing the CPU 5 of the computer apparatus as a component of the information providing server 105 to execute necessary software and control the constituent elements in the apparatus.

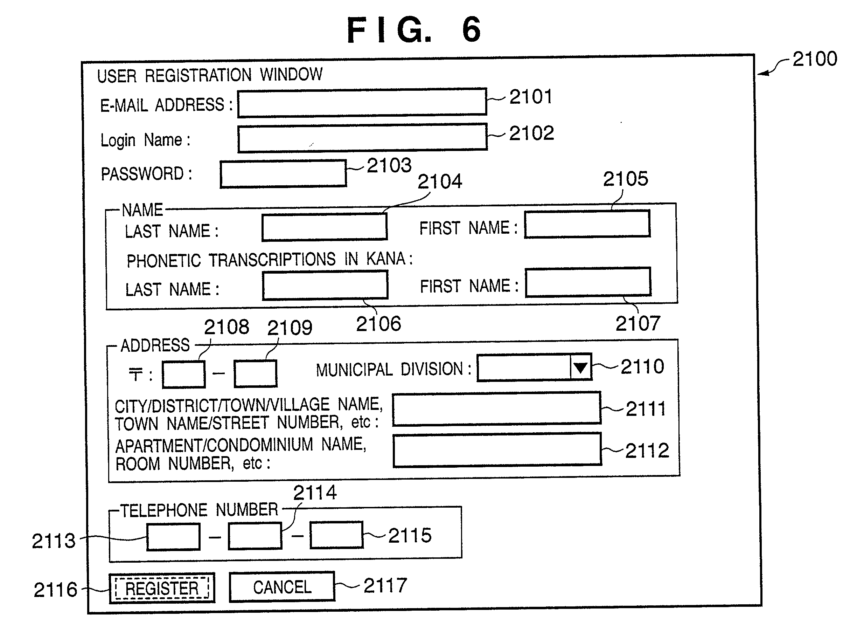

When the user registration button 1901 is pressed on the window 1900 in Fig. 4, the information providing server 105 transmits, for example, the display data of a user registration window 2100 in Fig. 6 to the user PC 102A, thereby starting user registration processing (step S2001).

The user registration window 2100 shown in Fig. 6 includes a notification destination e-mail address input area 2101 for the user to be registered, a login name input area 2102 for the user, a password input area 2103, name input areas 2104 and 2105, input areas 2106 and 2107 for the phonetic transcriptions of the name in kana, zip code input areas 2108 and 2109, a municipal division selection area 2110, address input areas 2111 and 2112, and telephone number input areas 2113 to 2115. Although not shown in Fig. 5, when a cancel button 2117 is pressed, the user registration processing is terminated, and the initial window 1900 in Fig. 4 is displayed.

When a registration button 2116 on the user registration window 2100 is pressed, it is checked in step S2002 whether data concerning predetermined necessary items have been input. In this embodiment, if all data concerning the notification destination e-mail address input area 2101, login name input area 2102, password input area 2103, name input areas 2104 and 2105, and telephone number input areas 2113 to 2115 as necessary items have been input, it is determined that data concerning the necessary items have been input.

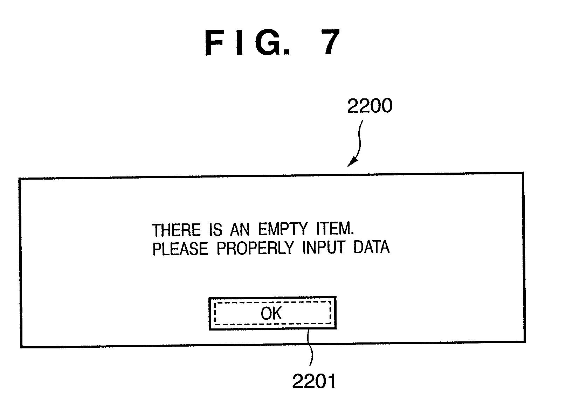

If it is determined in step S2002 that data concerning the necessary times have not been input, error window data is transmitted in step S2003. Fig. 7 shows an example of an error window 2200 displayed on the basis of this error window data. When an OK button 2201 on the error window 2200 is pressed, the flow returns to step S2001 to transmit the display data of the user registration window 2100 again.

If it is determined in step S2002 that data concerning the necessary items have been input, the CPU 5 searches the user information data table 400 managed by the database 118 (step S2004) to check whether the login name input in the login name input area 2102 on the user registration window has already been used by another registered user (step S2005).

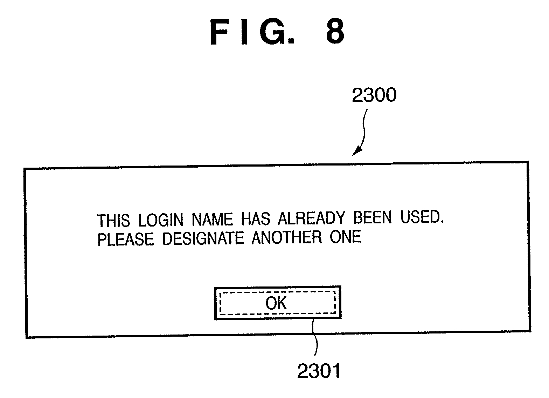

If the login name input in the login name input area 2102 has already been used, the data of an error window is transmitted in step S2006. Fig. 8 shows an example of an error window 2300 displayed on the basis of this error window data. If an OK button 2301 on the error window 2300 is pressed, the flow returns to step S2001 to transmit the display data of the user registration window 2100 again.

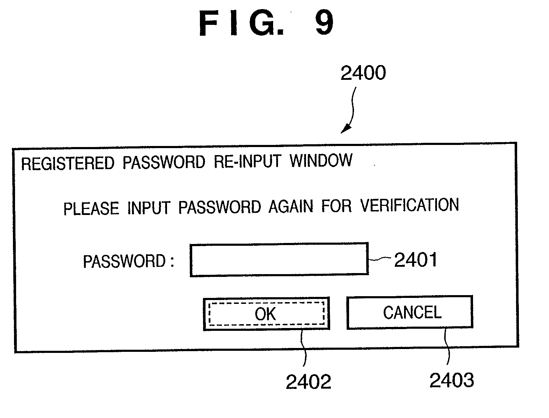

If the login name input in the login name input area 2102 is not found in the database 118, the data of a window for prompting the user to input a password again (e.g., a window 2400 shown in Fig. 9) (step S2007). If a cancel button 2403 on the password re-input window 2400 is pressed, the registration processing is interrupted, and the flow returns to step S2001 to transmit the display data of the user registration window 2100 again, although not shown in Fig. 5.

If an OK button 2402 on the password re-input window 2400 is pressed, it is checked whether the password input in a password input area 2401 on the window 2400 coincides with the password input in the password input area 2103 (step S2008).

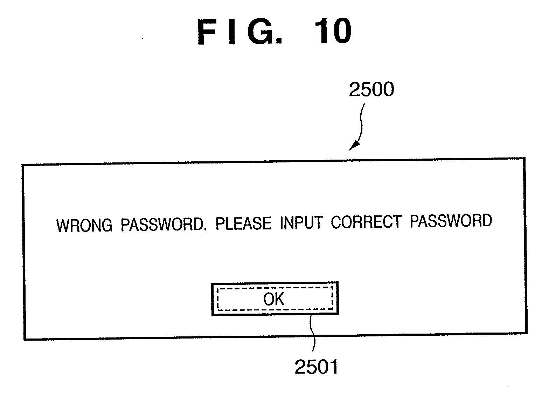

If it is determined that the re-input password differs from the initially set password, the data of an error window is transmitted in step S2009. Fig. 10 shows an example of an error window 2500 displayed on the basis of this error window data. If an OK button 2501 on the error window 2500 is pressed, the flow returns to step S2007 to transmit the display data of the password re-input window 2400 again.

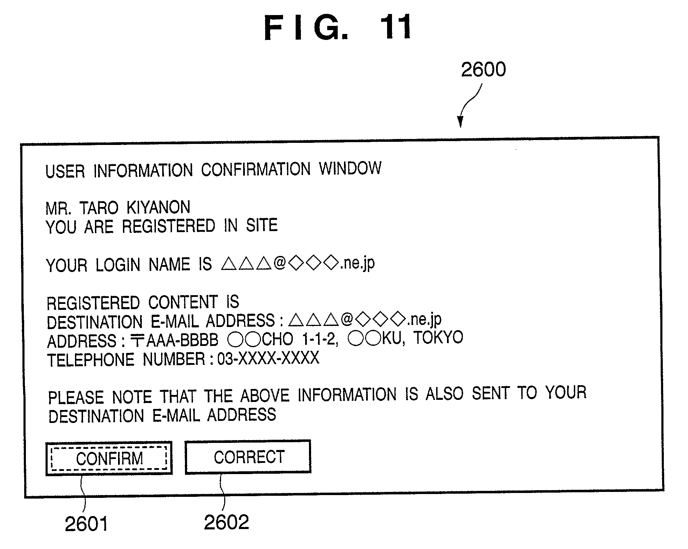

If it is determined that the re-input password coincides with the initially set password, for example, the display data of a user information confirmation window 2600 in Fig. 11 is transmitted (step S2010). The information displayed on the user information confirmation window 2600 is the information input by the user on the user registration window 2100. If a correction button 2602 is pressed, the flow returns to step S2001 to transmit the display data of the user registration window 2100 (and the data that have already been input) (step S2011).

If a confirmation button 2601 on the user information confirmation window 2600 is pressed, the maximum value of the values of user IDs issued from the database 118 in the past is acquired. The value obtained by adding 1 to the acquired value is the user ID of the user (step S2012).

In step S2013, one record is added to the user information data table 400, and the user ID obtained in step S2012 is registered in the user ID 401, and the pieces of input information are registered in the other corresponding items on the user registration window 2100.

The input areas on the user registration window 2100 correspond to the items in the user information data table 400 in such a manner that the pieces of information input in the input areas 2101 to 2115 on the user registration window 2100 are sequentially stored in the items 402 to 416 in the user information data table. In addition, 1 is stored in the user registration state 417.

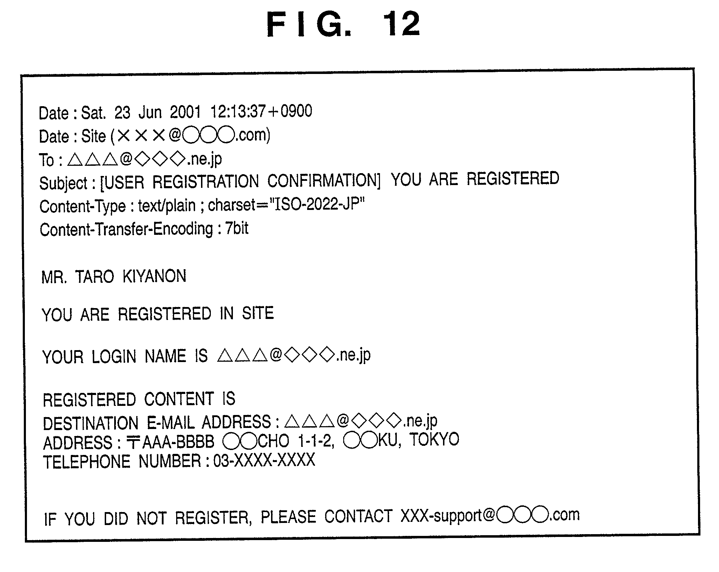

When all the necessary records are completely registered in the database 118 in step S2013, e-mail having the same contents as those displayed on the user information confirmation window 2600 is created and transmitted to the address registered in the destination mail address 402 in the user information data table 400 (step S2014). Fig. 12 shows an example of the e-mail transmitted in step S2014.

### ■ (Site Service Processing - User Authentication)

Processing for various services provided from the information providing server 105 to a given registered user will be described next with reference to Figs. 4, 14, and 15.

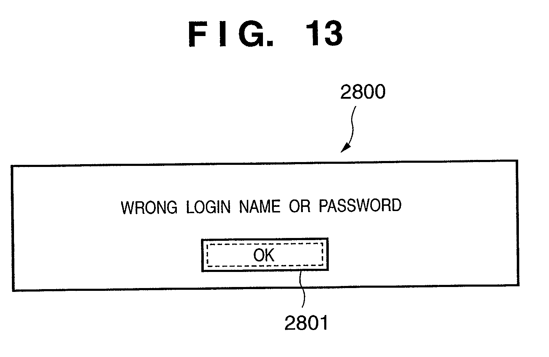

When the user inputs a login name and password in the login name input area 1902 and password input area 1903, respectively, and presses the login button 1904 on the login window 1900, the information providing server 105 searches the user information data table 400 in the database 118 for a corresponding login name, and compares it with the password. Assume that no corresponding login name is found in the user information data table 400 or that a corresponding login name is found, but the password registered in the user information data table 400 differs from the password input in the password input area 1903 on the login window 1900. In this case, for example, the display data of a warning window 2800 shown in Fig. 13 is transmitted. If a button 2801 on the warning window 2800 is pressed, the display data of the login window 1900 is transmitted again.

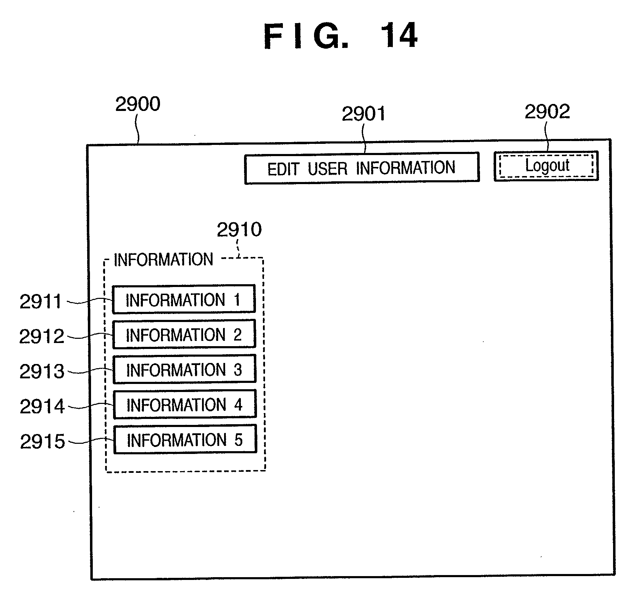

If a record containing both the login name and the password input on the login window 1900 is found in the user information data table 400, it is determined that the registered user has done proper login, and the data of a service provision initial screen corresponding to the registered user is created from information such as the user ID and transmitted. As a result of proper user authentication, the client (user PC 102A) is caused to record cookie information as authentication information. A button 2901 on a service provision initial window 2900 shown in Fig. 14 is a button for changing user information. A button 2902 is a logout button. Access buttons 2911 to 2915 for information to which the registered user who has logged in can refer to are arranged in an area 2910. The buttons 2911 to 2915 are linked to information to which the user having undergone user authentication can refer. That is, links containing URLs that specify information stored in the database 118 are described in these buttons.

### ■ (Site Service Processing - Outline of Processing after Login)

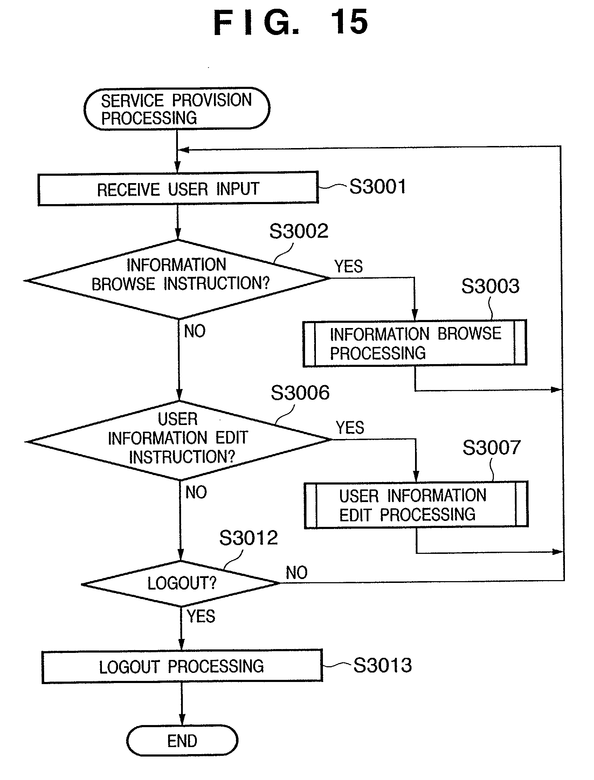

Fig. 15 is a flow chart showing an outline of the processing to be performed by the information providing server 105 in accordance with user's operation on the service provision initial window 2900 shown in Fig. 14 after the login processing by the registered user.

First of all, in step S3001, the CPU waits for some input from the user (operation on the service provision initial window 2900). It is checked in step S3002 whether the user input is an instruction concerning an information browse, i.e., any one of the buttons 2911 to 2915 included in the area 2910 is pressed. If a button in the 2910 is pressed, the flow advances to the information browse processing in step S3003.

If it is determined in step S3002 that the user input is not an instruction for processing associated with an information browse, it is checked in step S3006 whether the user input is an instruction for edit processing of user information, i.e., the button 2901 on the service provision initial window 2900 is pressed. If it is determined that the button 2901 is pressed, the data of the user registration window 2100 in Fig. 6 and the user information that has already been registered are transmitted in step S3007. The user can change the registered information by changing the contents of a desired item on the user registration window 2100 and pressing the registration button 2116.

If it is determined in step S3006 that the user input is not an edit instruction for the user information, it is checked in step S3012 whether the user input is a logout instruction. If the button 2902 on the service provision initial window 2900 is pressed, it is determined that the user input is an logout instruction, and the flow advances to step S3013.

If it is determined in step S3012 that the user input is not a logout instruction, the flow returns to step S3001 to wait for next user input.

In step S3013, logout processing is performed, and the display data of the initial window 1900 is transmitted.

Step S3003 (information browse processing) in Fig. 15 will be described in detail below. Since step S3007 (user information edit processing) is the same as the processing described in the description of the user registration processing, a detailed description thereof will be omitted. However, the user information edit processing differs from the processing in user registration in that the pieces of information registered by the user are displayed as initial values when a window is displayed, the service provision initial window 2900 is displayed when the registration button 2116 and cancel button 2117 are pressed, and when user information is registered in the database 118, the information is not registered as new information but existing user information is updated.

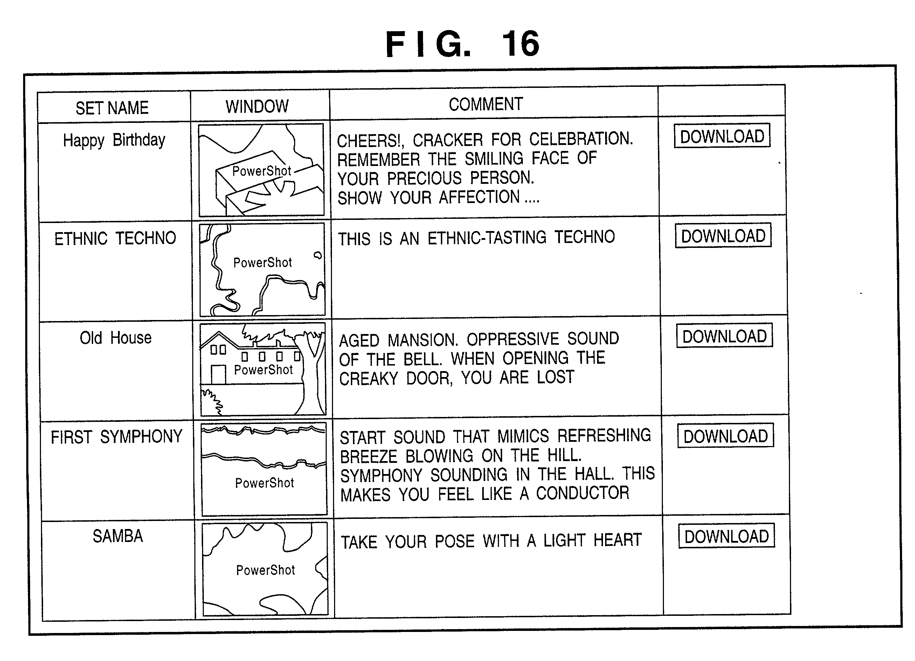

In information browse processing, information corresponding to a designated one of the buttons 2911 to 2915 in the area 2910 on the service provision initial window 2900 is transmitted to the user PC 102A. Fig. 16 shows examples of pieces of information to be provided in correspondence with the presses of the buttons 2911 to 2915.

In the above embodiment, only processing associated with display and information browse operation before and after login, window display operation, and the like are described. However, the types of display information, the number of user setting items, and the like can be arbitrarily set.

### ■ (Site Service Processing - Information Reference)

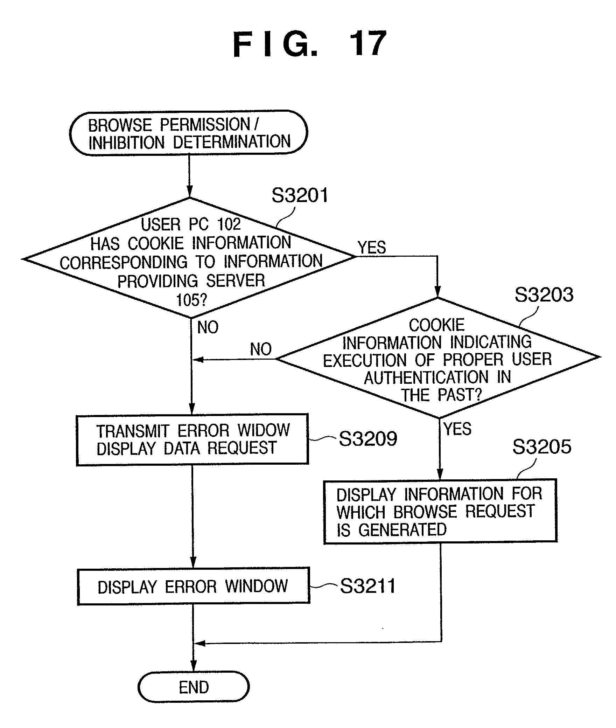

Browse permission/inhibition determination processing to be done when a user generates an information provision request by designating a URL or the like using the user PC 102 serving as a communication terminal according to this embodiment will be described next with reference to the flow chart of Fig. 17. Note that the following processing to be described with reference to Fig. 17 is implemented by executing a script as information for controlling a communication terminal which is transmitted from the information providing server 105 according to this embodiment in response to the browse request transmitted from the user PC 102.

As described above, the information providing server 105 according to this embodiment stores cookie information indicating proper execution of user authentication in the user PC 102 which is used by the registered user to access the information providing server 105. Even if, therefore, the user PC is powered off, the cookie information is held in the user PC 102.

When an information provision request is generated by designating a URL or the like, the user PC 102 serving as a communication terminal according to this embodiment determines the permission/inhibition of the information provision request by using the cookie information in the user PC 102.

In this case, the browse permission/inhibition determination processing to be described below is mainly executed by the CPU of the user PC 102 in terms of hardware, and by browser software in terms of software. This embodiment will exemplify the case wherein the script transmitted from the information providing server 105 in response to a browse request from the communication terminal is used. However, the same processing can be executed by using plug-in information of the browser or the like. Obviously, this processing may be executed by other methods which the user PC 102 can use.

Note that the following processing is done after the user PC 102 transmits a browse request to the information providing server 105 and receives information to be browsed and a script for implementing the following processing from the information providing server 105 in response to the request (step S3307 in Fig. 19). In addition, the script is so described as to perform the following processing with respect to a browse request for an initial window.

In step S3201, the CPU searches the user PC 102 for cookie information and checks whether there is cookie information corresponding to the information providing server 105.

If it is determined in step S3201 that the user PC 102 has such cookie information, the flow advances to step S3203 to analyze the cookie information. If information contained in the cookie information indicates proper user authentication in the past with respect to the information providing server 105, the information sent from the information providing server 105 in step S3201 is displayed (step S3205). Fig. 16 shows an example of the window displayed in step S3205.

If it is determined in step S3201 that there is no cookie information or the analysis result in step S3203 indicates that information contained in the cookie information does not indicate proper user authentication in the past, a browse request for an error window 3300 is transmitted to the information providing server 105 (step S3209). The error window transmitted from the information providing server 105 in response to this request is displayed (step S3211). Fig. 19 shows an example of the error window 3300.

### ■ (Information Reference by Third Party)

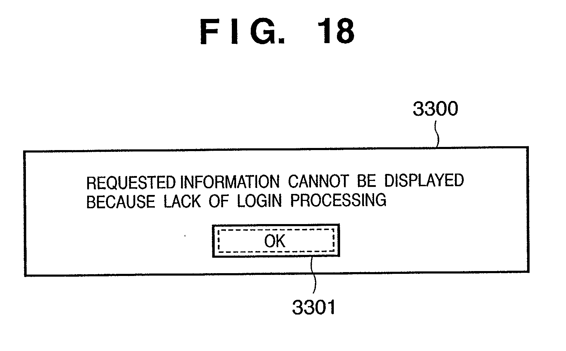

When the third party generates a browse request to the user PC 102 or information providing server 105 which performs the browse permission/inhibition determination processing shown in Fig. 17, since proper cookie information does not exist in the user PC 102 used by the third party, the error window in Fig. 18 is displayed, and no information is provided.

In addition, since even a registered user cannot receive information from the user PC 102 unless it is authenticated, stronger protection can be provided against browse operation of directly designating a URL.

The above embodiment has exemplified the arrangement for inhibiting a user PC that has not undergone user authentication from browsing information without performing user authentication. A validity term can also be set for cookie information by changing the contents of the cookie information stored in the user PC 102 or changing the determination criterion in step S3203 in Fig. 17.

This embodiment has exemplified only the case wherein the user PC 102 is used as a device for accessing the information providing server 105. However, an arbitrary device having the same function as that of the user PC 102 in the above embodiment can be used. As such devices which are currently available, portable terminals such as a PDA and cell phone can be enumerated. The present invention is also based on the use of other devices which will undergo feature expansion or will be newly developed in the future.

In the above embodiment, the information providing server 105 which has received a browse request may add the script to be transmitted to the information for which the browse request is generated at the time of transmission or may store the script in advance upon adding it to the information to be browsed.

In addition, the display data of the error window to be displayed in browse permission/inhibition determination processing for a user PC may be transmitted in response to a browse request, together with a script and the information for which a browse request is generated. In this case, there is no need to perform browse request transmission processing for an error window (step S3209) in the browse permission/inhibition determination processing in Fig. 17.

The above embodiment has exemplified only the information providing server formed from one device. However, the same function as that of the server apparatus of the present invention may be implemented by a system constituted by a plurality of devices.

The present invention also incorporates a case wherein a software program for implementing the function of the above embodiment (a program corresponding to at least one of the flow charts of Figs. 5, 15, 17, and 19) is supplied to a system or apparatus having a computer capable of executing the program from a recording medium directly or by wire/wireless communication, and a similar function is implemented by making the computer of the system or apparatus execute the supplied program.

The program codes themselves which are supplied and installed in the computer to allow the computer to implement the function/processing of the present invention also realize the present invention. That is, the computer program itself, which implements the function/processing of the present invention, is also incorporated in the present invention.

In this case, the program may take any form, e.g., an object code, a program executed by an interpreter, and script data supplied to an OS, as long as it has the function of the program.

As a recording medium for supplying the program, a floppy disc, a hard disc, a magnetic recording medium such as a magnetic tape, an optical/magnetooptical storage medium such as an MO, a CD-ROM, a CD-R, CD-RW, DVD-ROM, DVD-R, or DVD-RW, a nonvolatile semiconductor memory, or the like can be used.

An example of the method of supplying the program by wire/wireless communication is a method of storing, in the server on the computer network, the computer program itself which implements the present invention or a data file (program data file) which can be a computer program for implementing the present invention in a client computer, e.g., a compressed file including an automatic installation function, and downloading the program data file to a connected client computer. In this case, the program data file can be divided into a plurality of segment files, and the segment files can be stored in different servers.

That is, the present invention incorporates a server apparatus which downloads the program data file for allowing a computer to implement the function/processing of the present invention to a plurality of users.

In addition, the following operation can be performed. The program of the present invention is encrypted and stored in a storage medium such as a CD-ROM. Such storage media are then distributed to users. A user who satisfies a predetermined condition is allowed to download key information for decryption from, for example, a home page through the Internet. The user executes the encrypted program by using the key information to make the computer install the program, thereby implementing the function/processing of the present invention.

The function of the above embodiment is realized not only when the readout program is executed by the computer but also when the OS or the like running on the computer performs part or all of actual processing on the basis of the instructions of the program.

The function of the above embodiment is also realized when the program read out from the storage medium is written in the memory of a function expansion board inserted into the computer or a function expansion unit connected to the computer, and the CPU of the function expansion board or function expansion unit or the like performs part or all of actual processing on the basis of the instructions of the program.

As has been described above, according to the present invention, user authentication for a browse request can be done on the communication terminal side. This makes it possible to reliably protect information and reduce the user authentication load on the server apparatus.

Furthermore, the present invention can be applied to the system comprising either a plurality of units or a single unit. It is needless to say that the present invention can be applied to the case which can be attained by supplying programs which execute the process defined by the present system of invention.

## Claims

1. An information providing server which can send response information which corresponds to a request transmitted through a communication terminal connected to the network, **characterized by** comprising:
authentication means for performing authentication of a user who has transmitted the request by using the communication terminal;
instructing means for, if the authentication is properly performed by said authentication means, instructing the communication terminal to store authentication information indicating that the user who uses the communication terminal is properly authenticated;
creating means for creating the response information by combining a content information specified by the request and control information for controlling the communication terminal to present the user with the content information according to whether the authentication information is stored in the communication terminal or not; and
transmission control means for sending the response information to the communication terminal.

2. A communication terminal which can use an information providing server which sends response information which corresponds to a request received through the network, **characterized by** comprising:
authentication information storage means for, if a user who uses the information providing server through the communication terminal is properly authenticated in the information providing server, storing authentication information indicating that the user is properly authenticated; and
control means for controlling to present the user with a content information included in the response information returned in response to the request according to whether the authentication information corresponding to the user is stored or not.

3. The terminal according to claim 2, **characterized in that** when the authentication information is not stored, said control means presents the user with an error message.

4. An information providing system **characterized by** comprising the information providing server defined in claim 1.

5. An information providing system **characterized by** comprising the communication terminal defined in claim 2.

6. A control method for an information providing server which can send response information which corresponds to a request transmitted through a communication terminal connected to the network, **characterized by** comprising:
the authentication step of performing authentication of a user who has transmitted the request by using the communication terminal;
the instructing step of, if the authentication is properly performed in the authentication step, instructing the communication terminal to store authentication information indicating that the user who uses the communication terminal is properly authenticated;
the creating step of creating the response information by combining a content information specified by the request and control information for controlling the communication terminal to present the user with the content information according to whether the authentication information is stored in the communication terminal or not; and
the transmission control step of sending the response information to the communication terminal.

7. A control method for a communication terminal which can use an information providing server which sends response information which corresponds to a request received through the network, **characterized by** comprising:
the authentication information storage step of, if a user who uses the information providing server through the communication terminal is properly authenticated in the information providing server, storing authentication information indicating that the user is properly authenticated; and
the control step of controlling to present the user with a content information included in the response information returned in response to the request according to whether the authentication information corresponding to the user is stored or not.

8. A computer program for causing a computer apparatus to function as an information providing server which can send response information which corresponds to a request transmitted through a communication terminal connected to the network, **characterized by** comprising:
authentication means for performing authentication of a user who has transmitted the browse request by using the communication terminal;
instructing means for, if the authentication is properly performed by the authentication means, instructing the communication terminal to store authentication information indicating that the user who uses the communication terminal is properly authenticated;
creating means for creating the response information by combining a content information specified by the request and control information for controlling the communication terminal to present the user with the content information according to whether the authentication information is stored in the communication terminal or not; and
transmission control means for sending the response information to the communication terminal.

9. A computer program for causing a computer apparatus to function as a communication terminal which can use an information providing server which send response information which corresponds to a request received through the network, **characterized by** comprising:
authentication information storage means for, if a user who uses the information providing server through the communication terminal is properly authenticated in the information providing server, storing authentication information indicating that the user is properly authenticated; and
control means for controlling to present the user with a content information included in the response information returned in response to the request according to whether the authentication information corresponding to the user is stored or not.

10. A computer-readable storage medium **characterized by** storing the computer program defined in claim 8.

11. A computer-readable storage medium **characterized by** storing the computer program defined in claim 9.
